Europäisches Patentamt

European Patent Office

Office européen des brevets

(19)

(11) **EP 0 639 250 B1**

(12) **EUROPÄISCHE PATENTSCHRIFT**

(45) Veröffentlichungstag und Bekanntmachung des Hinweises auf die Patenterteilung:
**04.12.1996 Patentblatt 1996/49**

(21) Anmeldenummer: **93909550.1**

(22) Anmeldetag: **07.05.1993**

(51) Int Cl.$^6$: **F16H 61/02**, B60K 41/06

(86) Internationale Anmeldenummer:
**PCT/EP93/01127**

(87) Internationale Veröffentlichungsnummer:
**WO 93/23689 (25.11.1993 Gazette 1993/28)**

(54) **STEUERSYSTEM ZUM SCHALTEN EINES AUTOMATISCHEN GETRIEBES**

CONTROL SYSTEM FOR CHANGING THE RATIO OF AN AUTOMATIC TRANSMISSION

DISPOSITIF DE COMMANDE DE CHANGEMENT DE RAPPORT D'UNE TRANSMISSION AUTOMATIQUE

(84) Benannte Vertragsstaaten:
**AT BE CH DE ES FR GB IT LI NL SE**

(30) Priorität: **11.05.1992 DE 4215406**

(43) Veröffentlichungstag der Anmeldung:
**22.02.1995 Patentblatt 1995/08**

(73) Patentinhaber: **ZF FRIEDRICHSHAFEN Aktiengesellschaft**
**88038 Friedrichshafen (DE)**

(72) Erfinder:
- **DANZ, Wolfgang**
  **D-7990 Friedrichshafen 1 (DE)**
- **RUNGE, Wolfgang**
  **D-7980 Ravensburg (DE)**
- **ESCHRICH, Gerhard**
  **D-7992 Tettnang (DE)**
- **GILLICH, Udo**
  **D-7996 Meckenbeuren (DE)**

(56) Entgegenhaltungen:
EP-A- 0 304 089      EP-A- 0 377 953
EP-A- 0 391 387      DE-A- 3 811 541

**Beschreibung**

Die Erfindung bezieht sich auf ein Steuersystem zum Verändern der Übersetzung eines automatischen Getriebes. Insbesondere handelt es sich um eine Steuerung unter Verwendung von Fuzzy-Logik-Methoden zur Schaltpunktbestimmung. Es sind Mittel (Sensoren, Schalter usw.) zum Erfassen von Eingangsvariablen, die von einem Fahrer-Fahrzeugsystem abgeleitet sind, vorhanden. Für die Eingangsvariablen werden Zugehörigkeitsfunktionen, d. h. Fuzzy-Sets, erzeugt; hierzu sind ebenfalls Mittel vorhanden. Zum Schalten von Getriebeübersetzungen sind ferner Mittel, wie beispielsweise hydraulisch betätigbare Schaltkupplungen und Ventile, vorgesehen. Die Mittel zum Erfassen der Eingangsvariablen und die Mittel zum Erzeugen der Zugehörigkeitsfunktionen und die Mittel zum Schalten der Getriebeübersetzungen wirken in einer bestimmten Weise zusammen: Nach Fuzzy-Produktionsregeln werden Ausgangsvariable ermittelt, mit denen eine Getriebeübersetzung bestimmt wird.

Automatikgetriebe dienen grundsätzlich der Anpassung des von einem Antriebsmotor eines Fahrzeugs gelieferten Drehmomentes an dessen Zugkraftbedarf. Derartige automatische Getriebe haben eine elektronisch-hydraulische Steuerung. Eine zentrale Bedeutung für das gesamte Fahrverhalten kommt der elektronischen Steuerung zu, weil die Schaltvorgänge mit Hilfe von Last-Drehzahlkennfeldern erkannt und ausgeführt werden.

Ob und in welchen Gang geschaltet wird, hängt von der Lasteinstellung, d. h. dem aktuellen Zustand der Drosselklappe und der Abtriebsdrehzahl, des Getriebes ab. Die einzelnen Gangstufen werden in Abhängigkeit von Schaltkennlinien, die aus diesen beiden Parametern gebildet werden, geschaltet. Die Schaltkennlinien eines automatischen Getriebes bestehen aus Hoch- und Rückschaltgeraden für die einzelnen Gänge, die in einem Schaltdiagramm so verlaufen, daß zwischen den einzelnen Gangbereichen eine Hysterese entsteht. Trotz dieser Hysterese bestimmen letztlich scharfe Entscheidungsschwellen, ob und in welchen Gang geschaltet wird. Die Verwendung solcher scharfer Entscheidungsschwellen bedeutet zum einen, daß nur diskrete, invariante Zustände zur Auslösung eines Schaltvorgangs führen können und zum anderen, daß hier eine Verfälschung des logischen Aussagegehaltes der Entscheidung systematisch vorhanden ist. Diese Aussage läßt sich anhand eines Beispiels erläutern: Bei konstanter Drosselklappenstellung kann im Grenzfall eine Drehzahl von 3 000 Umdrehungen/min zu einer Schaltung führen, während bei einer Drehzahl von 2 990 Umdrehungen/min noch keine Schaltung eingeleitet wird, obwohl beide Systemzustände praktisch gleich sind.

Durch die Lage der Schaltkennlinien können weitere Kriterien in die Auslegung eines Schaltdiagramms einfließen. Bei einer leistungsorientierten (sportlichen) Fahrweise kommt es zu einem vergleichsweise späteren Hochschalten und einem früheren Rückschalten. Bei einer verbrauchsorientierten (ökonomischen) Fahrweise richtet sich die Lage der Schaltkennlinien nach einer mittleren Motordrehzahl. Das Schaltverhalten eines automatischen Getriebes kann geändert werden, indem adaptive Schaltkennlinien, d. h. Schaltkennlinien, die sich nach der Fahrleistung, dem Verbrauch oder speziellen Fahrzuständen richten, aktiviert werden.

Trotz einer Vielzahl bereits genutzter Möglichkeiten zur automatisierten Schaltpunktbestimmung ist das Ziel, die automatische Gangwahl dem Verhalten eines menschlichen Fahrers, insbesondere auch eines bestimmten Fahrertyps, anzunähern, nur unvollkommen erreicht.

Eine Möglichkeit, die menschliche Entscheidungsfindung besser zu repräsentieren, als dies über Schwellwerte oder Kennfelder möglich ist, ist der Einsatz der Fuzzy-Logik-Methode. Ein Fuzzy-Inferenz-System ermöglicht eine Entscheidung, bei der eine Vielzahl von Parametern berücksichtigt wird und Merkmale der menschlichen Entscheidungsfindung einfließen. Ein großer Vorteil dieser Methode besteht darin, daß sie eine direkte Verarbeitung verbal formulierter Problembeschreibungen erlaubt. Im Gegensatz zu herkömmlichen Steuerungsstrategien können Beurteilungskriterien herangezogen werden, die sich nicht in mathematische Beschreibungsformen fassen lassen, die aber bei der Entscheidungsfindung eine wesentliche Rolle spielen.

Ein Beispiel für ein Steuersystem zum Schalten eines automatischen Getriebes unter Verwendung von Fuzzy-Logik-Methoden ist der US-A-4,841,815 zu entnehmen. Als Eingangsvariable werden hierbei die Fahrzeuggeschwindigkeit bzw. deren Änderung, die Motorbelastung bzw. deren Änderung und der Fahrwiderstand in der Weise verarbeitet, daß für jeden zu schaltenden Gang Fuzzy-Beziehungen aufgestellt werden. Diesem Steuersystem liegt eine komplexe Matrix zugrunde, die aus parallel und in Reihe miteinander verknüpften Fuzzy-Beziehungen besteht. Im Vergleich zu einer Getriebesteuerung, bei der die Gangstufe lediglich durch die Fahrzeuggeschwindigkeit und die Drosselklappenöffnung bestimmt wird, bringt die so bekannte Fuzzy-Steuerung insofern eine Verbesserung mit sich, da die eingangs erwähnten scharfen Entscheidungsschwellen nicht vorliegen.

Die bekannte Steuerung ist in zweierlei Hinsicht jedoch mit Nachteilen behaftet. Zum einen werden keine Fuzzy-Regeln des Typs "Wenn ..., dann ...," verwendet, um das Expertenwissen eines menschlichen Fahrers zu repräsentieren. Zum anderen werden funktional komplizierte Fuzzy-Sets eingesetzt. Hier werden die Sets nicht durch Geraden gebildet, sondern durch von Geraden abweichende Funktionen, die mathematisch aufwendig zu beschreiben und rechnerisch aufwendig zu verarbeiten sind. Für den hier vorliegenden Fall einer relativ geringen Anzahl von Eingangsvariablen kann von akzeptablen Rechenzeiten ausgegangen werden. Bei komplexeren Systemen ist die vorgeschlagene Darstellung der Fuzzy-Sets und deren Verarbeitung nicht gut geeignet.

EP 0 639 250 B1

Ein Steuersystem zum Schalten eines automatischen Getriebes nach der Fuzzy-Logik-Methode und unter Verwendung von Fuzzy-Produktionsregeln ist der EP-A-0 347 261 und EP-A-0 347 263 zu entnehmen. Die vorgeschlagenen Lösungen befassen sich mit der Behandlung spezieller Fahrsituationen, um das Fahrverhalten zu optimieren. Insbesondere geht es darum, unerwünschte Pendelschaltungen zu verhindern.

Diese bekannten Lösungen verwenden eine sehr große Anzahl von Fuzzy-Produktionsregeln. Dies führt teilweise zu sehr ähnlichen Aussagen und Beschränkungen auf scharfe Schwellwertentscheidungen. Eine weitere Folge der sehr großen Anzahl von Fuzzy-Produktionsregeln ist ein nicht optimiertes Regelwerk, das nur relativ aufwendig zu implementieren ist und zu vergleichsweise langen Rechenzeiten führt.

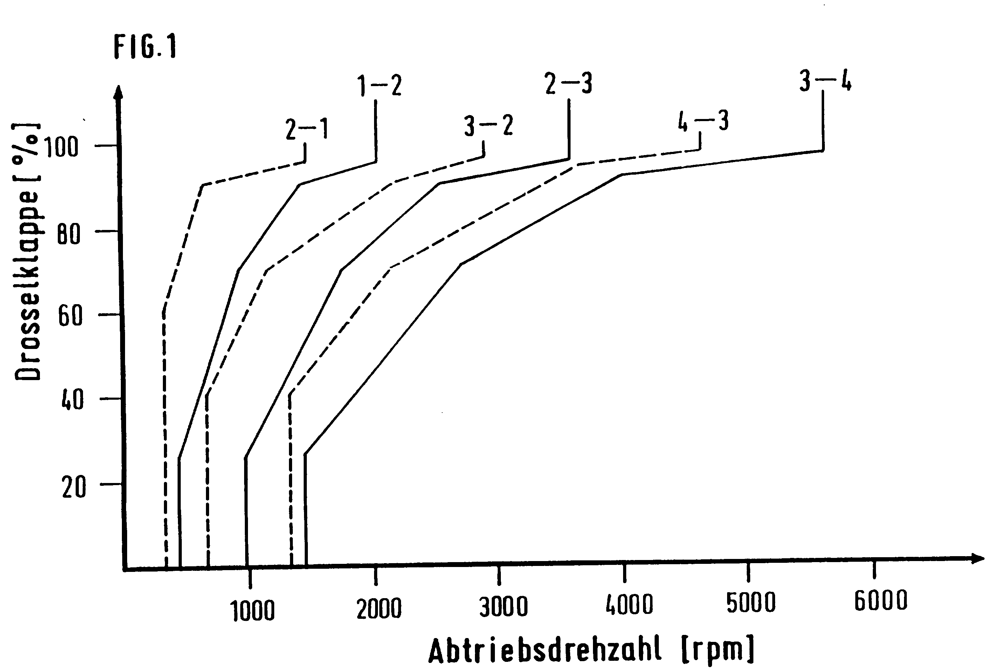

In der EP-A-0 304 089 werden die Eingangsdaten: Geschwindigkeit, Motorbeschleunigung, Gaspedalstellung und -beschleunigung und Lenkwinkelverstellung ausgewertet, um durch ein Fuzzy-Verfahren ein Fahrer- und ein Straßenprofil (Fig. 1a) zu bestimmen. Diese verschiedenen Fahr-Parameter werden aufgenommen und es wird eine Hüllkurve aus den Amplitudenklassen und der Häufigkeit gebildet. Nach Multiplizieren mit einer Matrix und Summieren werden die Fahrer(gentle, normal, sporty) und die Straßenprofile (congested, urban street, mountain road and highway) ermittelt.

Zu den Lösungen, die sich mit der Betrachtung spezieller Fahrsituationen unter Verwendung von Fuzzy-Logik befaßt, zählt ferner die DE-A-41 07 879.

Ein Steuersystem zum Schalten von Automatikgetrieben unter Berücksichtigung des normalen Fahrbetriebes und auch spezieller Fahrsituationen unter Anwendung von Fuzzy-Logik ist ferner noch der EP-B-0 454 504 zu entnehmen. Auch diesem System liegt eine vergleichsweise große Anzahl von Fuzzy-Regeln zugrunde, die untereinander gleichberechtigt sind. Eine Ausnahme hiervon machen Vorrangregeln (metarules), die ein Überdrehen des Motors verhindern. Auch bei dieser Lösung liegt ein nichtoptimiertes Regelwerk mit einer großen Anzahl von Regeln vor.

Allen vorstehend erläuterten Steuersystemen zum Schalten von automatischen Getrieben ist gemeinsam, daß die Methoden der Fuzzy-Logik entweder in an sich unzureichender Weise angewandt oder lediglich bei Betrachtung spezieller Fahrsituationen herangezogen werden oder, wenn neben dem normalen Fahrbetrieb auch spezielle Fahrsituationen berücksichtigt werden sollen, zu unübersichtlichen, nichtoptimierten Regelwerken mit langen Rechenzeiten ausgebaut sind, denen eine große Anzahl von Regeln zugrunde liegt. Keines der bekannten Systeme ist in der Lage, das Schaltverhalten praktischen Anforderungen schnell und effektiv anzupassen.

Der vorliegenden Erfindung liegt die Aufgabe zugrunde, ein Steuersystem zum Schalten eines automatischen Getriebes unter Verwendung von Fuzzy-Logik-Methoden zu schaffen, das bei der Auslegung der Schaltstrategie Beurteilungskriterien wie: Fahrleistung, Verbrauch und Aufwand berücksichtigt und das durch bedarfsweise Änderung des Schaltverhaltens durch Aktivierung adaptiver Schaltstrategien auch auf besondere Merkmale wie: Fahrweise und Fahrzustand effizient reagiert.

Die gestellte Aufgabe wird erfindungsgemäß mit einem Steuersystem zum Schalten eines automatischen Getriebes gelöst, dessen Schwerpunkt auf einer adaptiven Gesamtstruktur liegt. Hierzu ist die Gesamtheit der Fuzzy-Produktionsregeln in Fraktionen aufgeteilt. Ein Grundregelsatz von Fuzzy-Produktionsregeln dient der Auslegung eines Schaltdiagrammes, das eine normale, verbrauchsorientierte Fahrweise widerspiegelt. Dieser Grundregelsatz, der aus wenigen Regeln besteht, repräsentiert das Expertenwissen eines menschlichen Fahrers. Die Schaltstrategie, die diesem Schaltdiagramm zugrunde liegt, wird über einen Adaptionsregelsatz von Fuzzy-Produktionsregeln in Abhängigkeit von einer aktuellen Fahrweise adaptiert. Das Schaltverhalten ändert sich von einer verbrauchs orientierten Fahrweise bis hin zu einer leistungsorientierten Fahrweise. Dabei bleibt der eigentliche Grundregelsatz immer in gleicher Weise erhalten, d. h. es werden keine Regeln hinzugefügt, noch werden Regeln gelöscht oder abgewandelt. Die Information zur Variation der Fahrweise wird dem System über die Auslegung der Fuzzy-Sets des Adaptionsregelsatzes unter Verwendung von Regelprioritäten und Fuzzy-Operatoren und gegebenenfalls Fuzzy-Modifikatoren aufgeprägt. Die Adaption der Schaltkennlinien ist von Ausgangsvariablen abhängig, die von einem Identifikationsregelsatz von Fuzzy-Produktionsregeln geliefert werden. Nach diesen Regeln wird ein Fahrer nach seiner Fahrweise eingestuft, die von einer verbrauchsorientierten Fahrweise bis hin zu einer leistungsorientierten Fahrweise reicht.

Ein weiterer wesentlicher Vorteil der vorgeschlagenen Lösung besteht darin, daß die Fraktionen der verwendeten Fuzzy-Produktionsregeln jeweils aus wenigen Einzelregeln gebildet werden. Durch die hierarchische Gliederung der Fraktionen selbst entsteht ein optimiertes Regelwerk, mit dessen Hilfe adaptive Schaltstrategien effizient aktiviert werden können. Dies ist auf die Bündelung weniger Einzelregeln, eine optimale Regelstruktur und demzufolge schnelle Rechenzeiten zurückzuführen.

Bei einem bevorzugten Ausführungsbeispiel des erfindungsgemäßen Steuersystems werden adaptive Schaltstrategien aktiviert, bei denen mit Hilfe eines ergänzenden Adaptionsregelsatzes von Fuzzy-Produktionsregeln ein aktueller Fahrzustand (Stadt, Autobahn, Bergfahrt, Landstraße) berücksichtigt wird.

Es ist zweckmäßig, zur Identifikation des Fahrers einen Filter vorzusehen. Die zur Fahreridentifikation genutzten Meßgrößen (z. B. Drosselklappenstellung, Änderung der Drosselklappenstellung pro Zeiteinheit, Abtriebsdrehzahl, Beschleunigung, Verzögerung, aktueller Gang, Zugkraftüberschuß, Querbeschleunigung, Lenkwinkel, Lenkwinkelgeschwindigkeit, Bremsschalter ein/aus) stellen die Eingangsvariablen dar, die durch einen Filter zu Ausgangsvariablen

3

umgeformt werden. Diese Ausgangsvariablen sind gemittelte Merkmale, die den Fahrstil des jeweiligen Fahrers charakterisieren.

Das Steuersystem kann in vorteilhafter Weise hinsichtlich seiner Lernfähigkeit dadurch ausgebaut werden, daß auch der jeweils aktuelle Fahrzustand berücksichtigt wird. Analog zur Fahreridentifikation werden bestimmte Eingangsvariable zur Erkennung des Fahrzustandes durch einen Filter zu Ausgangsvariablen in Form gemittelter Merkmale reduziert. Diese erlauben eine Erkennung des Fahrzustands (Stadt, Autobahn, Bergfahrt, Landstraße). Bei den Filtern zur Identifikation des Fahrers und zur Erkennung des Fahrzustandes kann es sich um getrennte Bauteile oder ein gemeinsames Bauteil handeln.

Um auch bei der Fahreridentifikation und Fahrzustandserkennung schnell zu aussagefähigen Resultaten zu kommen, ist es vorteilhaft, daß die Ausgangsvariablen durch Filterung nach Fuzzy-Produktionsregeln erzeugt werden. Die vorgeschlagene Fuzzy-Filterung funktioniert in der Weise, daß eindeutige Merkmale schnell zu einer entsprechenden Bewertung führen, während weniger eindeutige Merkmale langsamer in eine Bewertung einfließen.

Um die vorstehend erwähnten Richtlinien umzusetzen, ist es vorteilhaft, daß der Filter nach Fuzzy-Produktionsregeln unterschiedlich signifikanten Eingangsvariablen Bewertungs-Inkremente zuordnet. Diese werden zu Bewertungszahlen aufsummiert, die die Ausgangsvariablen bilden. Ist ein Merkmal beispielsweise stark ausgeprägt, dann ist das Bewertungs-Inkrement positiv groß. Ist es schwach ausgeprägt, wird das Bewertungs-Inkrement mit negativ groß angesetzt. Bei einem mittelmäßig ausgeprägten Merkmal ist das Bewertungs-Inkrement zweckmäßigerweise null.

Da die zur Filterung eingesetzten Fuzzy-Produktionsregeln zunächst nur eine Tendenz aufzeigen und erst über eine nachfolgende Summation dieser Inkremente eine endgültige Bewertungszahl entsteht, ist der Filter aus einem Regel-Prozessorteil und einem Integrator zusammengesetzt.

Statt einer symmetrischen Codierung der Folgezustände für das jeweilige Bewertungs-Inkrement (positiv groß = +1, null = 0 und negativ groß = -1) ist auch eine asymmetrische Codierung möglich. Durch eine asymmetrische Codierung der Folgezustände ist es auf vorteilhafte Weise möglich, die Gradienten bei ansteigenden bzw. abfallenden Eingangsvariablen unterschiedlich zu wichten.

Bei der Identifikation des Fahrzustandes ist eine Unterscheidung zwischen Stadt, Landstraße und Autobahn zweckmäßig. Im Stadtverkehr ist, verglichen mit einer Autobahnfahrt, deutlich häufiger zu schalten. Bei Bergfahrt (Serpentinen) sollen äußerst störende Pendelschaltungen unterdrückt werden; der Gang mit ausreichender Zugkraft sollte hier beibehalten werden. Bei Talfahrt nutzt der Fahrer die Bremswirkung des Motors aus, so daß hier entsprechende Rückschaltungen angebracht sind. In Situationen, in denen keine eindeutige Aussage möglich ist, wird der Fahrzustand "Landstraße" vom System her ausgewählt. Dies ist insbesondere für den Stop-and-Go-Betrieb der Fall.

Grundsätzlich ist es möglich, mindestens eine Zugehörigkeitsfunktion des Grundregelsatzes durch Parallelverschiebung in Ordinatenrichtung zu verlagern, um zu einem adaptierten Schaltverhalten zu kommen. Anstelle einer Parallelverschiebung kann auch eine dynamische, nichtlineare Variation realisiert werden. Auch eine kombinierte Vorgehensweise ist grundsätzlich möglich. Zur Schaltpunkt-Adaption ist grundsätzlich eine Veränderung in der beschriebenen Art und Weise der Zugehörigkeitsfunktionen der Eingangsvariablen der Motordrehzahl und/oder der Drosselklappenstellung ausreichend.

Eine bevorzugte, weil besonders einfache, Methode ist die Modulation der Motordrehzahl. Die Motordrehzahl bietet sich deshalb an, weil sie eine zentrale strategische Größe des Systems darstellt. Wie bereits erwähnt, definiert der Grundregelsatz der Fuzzy-Produktionsregeln eine verbrauchsorientierte Fahrweise. Dies gilt insbesondere für das Fuzzy-Set der Motordrehzahl. Für eine mehr leistungsorientierte Fahrweise müßten die Fuzzy-Sets des Grundregelsatzes zu höheren Drehzahlen "verschoben" werden. Dies ist dadurch auf besonders einfache und elegante Weise möglich, wenn die Eingangsvariable "Motordrehzahl" des Grundregelsatzes durch eine nichtlineare Addition eines Offsets moduliert wird. Der Offset kann als Fuzzy-Array implementiert sein. Im vorliegenden Fall erfolgt die Defuzzyfizierung über die Ermittlung des Flächenschwerpunkts, so daß der Offset der Motordrehzahl jeden Wert zwischen Null und 1 800 Umdrehung/min ausmachen kann.

Aus Sicherheitsgründen ist es vorteilhaft und notwendig, den Fuzzy-Produktionsregeln unterschiedliche Prioritäten zuzuweisen. Dies kann einfach durch einen einstellbaren numerischen Wert geschehen. Über die Prioritäten kann den Regeln ein Vertrauensmaß zugeordnet werden. Sichere Aussagen erhalten demzufolge mehr Gewicht als vages Wissen.

Um die Möglichkeiten, die die Fuzzy-Logik bietet, auszuschöpfen, werden bei der Aggregation der Fuzzy-Sets des Grund-, Adaptions- und Identifikations-Regelsatzes bevorzugt Gamma-Operatoren verwendet. Hiermit kann das menschliche Schließen recht zutreffend modelliert werden.

Bedarfsweise können die Fuzzy-Sets der fraktionierten Regelsätze durch Modifikatoren modifiziert werden. Bei der Normalisierungs-Operation erhält man ein normalisiertes Fuzzy-Set. Durch den Konzentrations-Operator erfolgt eine stärkere Konzentration des Fuzzy-Sets (schärfer-werden). Durch den Dilations-Operator wird das Fuzzy-Set aufgeweicht.

Besonders vorteilhaft ist die kombinierte Zuweisung von Prioritäten und die Anwendung von Gamma-Operatoren. Hiermit wird das menschliche Schließen unter Beachtung der Aspekte Sicherheit und Vertrauensmaß in besonders guter Weise nachgebildet.

Nach einem weiteren vorteilhaften Merkmal ist die Gesamtheit der Fuzzy-Produktionsregeln hierarchisch in Regelpakete gegliedert. Diese Regelpakete werden blockweise bearbeitet. Ihre Bearbeitung ist abhängig vom Vorliegen oder Nichtvorliegen einer Einsprung-Bedingung. Mit der Ordnung in Regelpakete erreicht man ein optimiertes Regelwerk mit einer Selektion nur wirklich notwendiger Regeln. Im Gegensatz zu einem Regelwerk, das aus einer Vielzahl eigenständiger Regeln gebildet ist, was die Rechenzeit stark vergrößert, hat das Unterteilen in einzelne Regelpakete eine Selektion in der Bearbeitung notwendiger Regeln zur Folge. Die Rechenzeit wird daher entsprechend verkürzt.

Die Einsprung-Bedingungen können gangspezifischen Regeln oder spezifischen Zuständen in vorteilhafter Weise entsprechen.

Zur Erfindung zählt ferner ein Fuzzy-Controller mit Eingängen für Eingangsvariable zur Bildung von Zugehörigkeitswerten und Inferenzen sowie Mitteln zum Defuzzyfizieren zu Ausgangsvariablen, mit denen eine Getriebeübersetzung eines automatisch zu schaltenden Getriebes bestimmt wird.

Dieser Fuzzy-Controller zeichnet sich durch einen Regel-Prozessor zum Bestimmen von Schaltpunkten nach einem Grundregelsatz, einen Regel-Prozessor zum Adaptieren der Schaltpunkte nach einem Adaptions-Regelsatz, einen Regel-Prozessor zum Identifizieren eines Fahrers nacn einem Identifikations-Regelsatz und ferner durch einen Regel-Prozessor zur Erkennung eines Fahrzustandes nach einem ergänzenden Adaptions-Regelsatz aus. Diese Regel-Prozessoren sind gemeinsam auf einer Prozessorkarte angeordnet, was die Herstellung vereinfacht.

Es kann schließlich für den Fahrer vorteilhaft sein, wenn ihm die Arbeitsweise des Steuersystems visuell angezeigt wird. Hierzu wird ein Modul zur visuellen Anzeige der nach dem Grundregelsatz ermittelten Gangstufe, der adaptierten aktuellen Gangstufe und/oder der Fahrweise des Fahrers und/oder des Fahrzustandes vorgeschlagen. Vorteilhaft handelt es sich hier um ein LCD-Display.

Weitere für die Erfindung wesentliche Merkmale und die daraus resultierenden Vorteile sind der nachfolgenden Beschreibung eines Ausführungsbeispiels anhand der Zeichnungen zu entnehmen.

Es zeigen:

Fig. 1     ein konventionelles (Stand der Technik) Schaltdiagramm eines automatischen Getriebes;

Fig. 2     Zugehörigkeitsfunktionen am Beispiel der Motordrehzahl;

Fig. 3     eine schematische Übersicht des Steuersystems nach der Erfindung;

Fig. 4     weitere Zugehörigkeitsfunktionen am Beispiel der Motordrehzahl;

Fig. 5     Zugehörigkeitsfunktionen am Beispiel der Drosselklappenstellung;

Fig. 6     typische Signalverläufe;

Fig. 7     eine Dichte-Funktion, abgeleitet aus typischen Signalverläufen;

Fig. 8     eine Zugehörigkeitsfunktion zur Erkennung eines Fahrzustandes und

Fig. 9     die modifizierte Zugehörigkeitsfunktion nach Fig. 8.

In Fig. 1 ist schematisch das Schaltdiagramm (Getriebekennfeld) eines automatischen (Stufen-)Getriebes wiedergegeben. Die Darstellung entspricht dem Stand der Technik und dient lediglich der Erläuterung einiger Zusammenhänge. Auf der Ordinate ist die Abtriebsdrehzahl des Getriebes - entsprechend einer Fahrgeschwindigkeit-aufgetragen. Auf der Abszisse ist die Drosselklappenstellung in Prozent aufgetragen (von vollständig geschlossen bis vollständig geöffnet). Bei den mit durchgezogenen Linien eingezeichneten Geraden handelt es sich um Hochschaltgerade, die die Bereiche der einzelnen Getriebegänge in Abhängigkeit von der zu übertragenden Leistung markieren. Es sind dies die Hochschaltgerade 1-2 vom ersten in den zweiten Gang, die Hochschaltgerade 2-3 vom zweiten in den dritten Gang und die Hochschaltgerade 3-4 vom dritten in den vierten Gang. Analog hierzu bedeuten die mit gestrichelten Linien eingezeichneten Geraden die Rückschaltgeraden von den jeweils höheren Gängen vier, drei und zwei in den jeweils niedrigeren Gang drei, zwei und eins. Zwischen den Rückschaltgeraden 2-1, 3-2 und 4-3 und den Hochschaltgeraden 1-2, 2-3 und 3-4 besteht, da diese nicht deckungsgleich verlaufen, jeweils ein Hysteresebereich. Hierdurch wird das Pendeln des automatischen Getriebes vermieden, so daß nach dem Rückschalten aufgrund einer steigenden Fahrgeschwindigkeit nicht unmittelbar erneut hochgeschaltet wird.

Vom Schaltdiagramm entsprechend Fig. 1 sei angenommen, daß es eine ökonomische Fahrweise widerspiegelt.

Aus dem erläuterten Schaltdiagramm lassen sich zwei wesentliche Feststellungen ableiten: Zum Schalten eines automatischen Getriebes wird mit Hilfe von Schaltdiagrammen bzw. Last-/Drehzahlkennfeldern (Getriebekennfeldern) entschieden, ob ein Schaltvorgang erforderlich ist. Ob und in welchen Gang geschaltet wird, hängt somit ausschließlich von der aktuellen Drosselklappenstellung (Gaspedal) und der Abtriebsdrehzahl ab. Die Hoch- und Rückschaltgeraden sind scharfe Entscheidungsschwellen. Die Verwendung solcher scharfer Entscheidungsschwellen bedeutet zum einen, daß nur diskrete, invariante Zustände zur Auslösung eines Schaltvorganges führen können und zum anderen, daß hier eine Verfälschung des logischen Aussagegehaltes der Entscheidung systematisch vorhanden ist. Beispielsweise kann eine Drehzahl von 3 000 Umdrehungen/min (gleichbleibende Drosselklappenstellung vorausgesetzt) zu einer Schaltung führen, während bei einer Drehzahl von 2 990 Umdrehungen/min noch keine Schaltung initialisiert wird, obwohl nahezu identische Systemzustände vorliegen.

Das Schaltverhalten, das durch das Schaltdiagramm nach Fig. 1 repräsentiert wird, kann dadurch geändert werden, daß adaptive Schaltkennlinien aktiviert werden. Bei einer leistungsorientierten Fahrweise werden die Hoch- und Rückschaltgeraden in Richtung auf höhere Motordrehzahlen verschoben, verglichen mit einer verbrauchsorientierten Fahrweise. An der Tatsache scharfer Entscheidungsschwellen ändert sich hierbei nichts.

Die Erfindung beschäftigt sich allgemein mit dem Problem, die Schaltpunktbestimmung möglichst gut an die Gangwahl des menschlichen Fahrers anzunähern. Hierbei soll die Berücksichtigung einer Vielzahl von Parametern die Sicherheit der Entscheidungsaussage erhöhen. Um die genannten Nachteile einer Kennfeld-Steuerung zu vermeiden und die menschliche Entscheidungsfindung realistischer zu modellieren, verwendet die Erfindung Fuzzy-Logik-Methoden zur Schaltpunktbestimmung.

Der Aufbau und die Wirkungsweise eines erfindungsgemäßen Steuersystems wird nachfolgend erläutert:

Das erfindungsgemäße Steuersystem geht im Kern von der verbalen Problembeschreibung einer Schaltpunktbestimmung aus. Zunächst wird über einen Grundregelsatz von Fuzzy-Produktionsregeln, der eine verbrauchsorientierte Fahrweise definiert, eine Schaltpunktbestimmung vorgenommen. Dieser Grundregelsatz stellt das Expertenwissen eines menschlichen Fahrers dar.

Der Grundregelsatz wird in Abhängigkeit von einer aktuellen Fahrweise durch einen Adaptions-Regelsatz modifiziert. Der Adaptions-Regelsatz arbeitet mit Fuzzy-Produktionsregeln. Die Modifikation erfolgt stufenlos in den Grenzen zwischen einer verbrauchsorientierten und einer leistungsorientierten Fahrweise.

Ein Identifikations-Regelsatz von Fuzzy-Produktionsregeln wird zur Erkennung der Fahrweise eines bestimmten Fahrers herangezogen, die von einer verbrauchsorientierten Fahrweise bis hin zu einer leistungsorientierten Fahrweise reicht.

Allgemein gilt, daß der eigentliche Grundregelsatz immer in gleicher Weise erhalten bleibt. Es werden keine Regeln hinzugefügt, noch werden Regeln gelöscht oder in ihrer Aussage abgewandelt.

Das Steuersystem arbeitet mit Methoden der Fuzzy-Logik, deren Grundlage durch Fuzzy-Sets (unscharfe Mengen) gebildet werden. Diese Fuzzy-Sets repräsentieren die in den Regelprämissen enthaltenen subjektiven Bedingungen, wie z. B.: hohe Motordrehzahl, mittlere Fahrzeuggeschwindigkeit, kleine Gaspedalstellung (Drosselklappenstellung) usw. Es handelt sich hier um Zugehörigkeitsfunktionen, mit deren Hilfe Aussagen bezüglich aktueller System-Parameter getroffen werden können. Hieraus läßt sich ein Maß für das Zutreffen der einzelnen Regel-Prämissen ableiten.

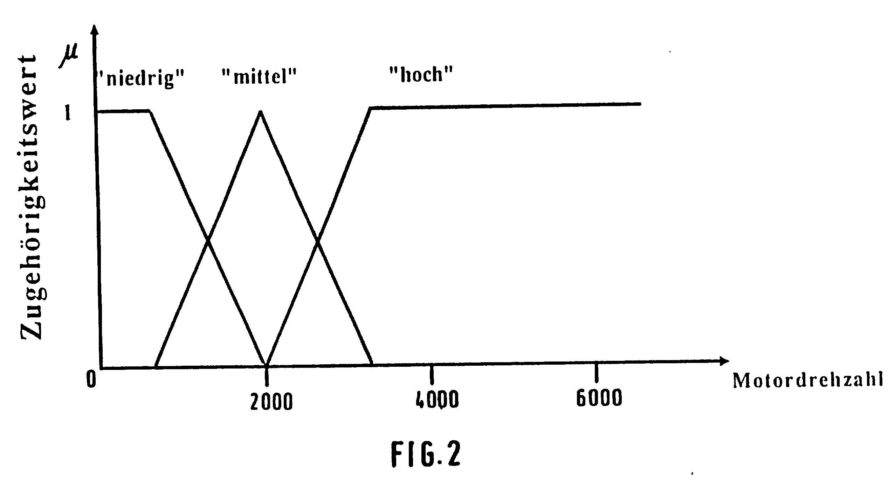

In Fig. 2 sind einzelne Fuzzy-(Sub)Sets am Beispiel der Motordrehzahl wiedergegeben. Auf der Ordinate ist die Motordrehzahl in Umdrehungen/min aufgetragen. Auf der Abszisse sind Zugehörigkeitswerte my von null bis maximal eins aufgetragen. Die unscharfe Menge Motordrehzahl "niedrig" ist durch das links gezeichnete, trapezförmige Fuzzy-Set eingetragen. Die unscharfe Menge Motordrehzahl "mittel" ist durch das mittlere, dreieckförmige Fuzzy-Set definiert. Die unscharfe Menge Motordrehzahl "hoch" wird wiederum durch das rechte, ebenfalls trapezförmige Fuzzy-Set definiert.

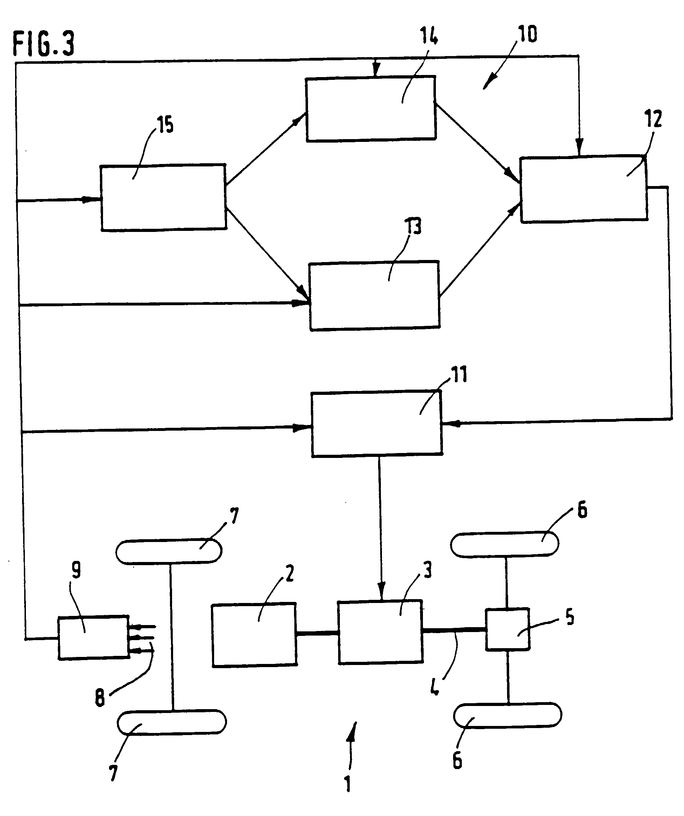

In Fig. 3 ist schematisch ein Fahrzeug 1 mit seinen Hauptkomponenten Motor 2 und automatischem Getriebe 3, einem Antriebswellenstrang 4, einem Ausgleichsgetriebe 5, den angetriebenen (Hinter-)Rädern 6 und den lenkbaren vorderen Rädern 7 gezeichnet.

Eine Reihe von Fahrzeug-Parametern bilden Eingangsvariable 8, die laufend durch geeignete Mittel 9 (Sensoren usw.) erfaßt werden. Bei diesen Eingangsvariablen kann es sich um folgende Fahrzeug-Parameter handeln: Drosselklappenstellung, Gradient der Veränderung der Drosselklappenstellung, aktuelle Geschwindigkeit (Raddrehzahlen), Beschleunigung, Verzögerung, Positionsstellung eines Getriebe-Wahlschalters, berechneter Zugkraftüberschuß nach einem möglichen Hochschalten, Größe der Querbeschleunigung, Größe des Lenkwinkels, Lenkwinkelgeschwindigkeit, Bremsschalter ein/aus, Blinker usw.

Das Steuersystem zum Schalten des automatischen Getriebes 3 setzt sich aus mehreren Funktionsblöcken zusammen:

Einem Funktionsblock 11, der als Basismodul bezeichnet werden kann,

einem Funktionsblock 12, der als Adaptionsmodul eingesetzt wird,
einem Funktionsblock 13 als Modul zur Fahrer-Identifikation,
einem Funktionsblock 14 als Modul zur Fahrzustands-Erkennung und

einem Funktionsblock 15, der verschiedene Filteraufgaben zu erfüllen hat.

Zwischen den einzelnen Funktionsblöcken 11 bis 15 besteht eine Verknüpfung, die durch die Richtungspfeile kenntlich gemacht ist.

Aufbau und Wirkungsweise des Funktionsblocks 11:

Der Funktionsblock 11 hat als Basis-Modul die Aufgabe, nach Fuzzy-Logik-Methoden eine Schaltpunktbestimmung vorzunehmen, die eine ökonomische Fahrweise wiedergibt. Über die nachfolgend erwähnten Regeln wird das Expertenwissen eines menschlichen Fahrers definiert:

**Regel 1:** (Priorität: 1.0, Gamma: 0.0)
Wenn Motordrehzahl hoch und niedrige Gangstufe, dann einen Gang hochschalten.

**Regel 2:** (Priorität: 0.9, Gamma: 0.0)
Wenn Motordrehzahl niedrig und hohe Gangstufe, dann einen Gang zurückschalten.

**Regel 3:** (Priorität: 1.0, Gamma: 0.0)
Wenn Motordrehzahl mittel, dann Gang beibehalten.

**Regel 4:** (Priorität: 3.0, Gamma: 0.1)
Wenn Motordrehzahl nicht hoch und Drosselklappe groß und Beschleunigung positiv und Gangstufe niedrig, dann Gang beibehalten.

**Regel 5:** (Priorität: 2.0, Gamma : 0.1)
Wenn Motordrehzahl nicht niedrig und Drosselklappe klein und Beschleunigung positiv und Fahrzeuggeschwindigkeit niedrig, dann einen Gang hochschalten.

**Regel 6:** (Priorität: 1.0, Gamma: 0.0)
Wenn Drosselklappe sehr groß und Gangstufe hoch und Fahrzeuggeschwindigkeit mittel und Beschleunigung nicht ausreichend, dann einen Gang zurückschalten.

Die vorstehend formulierten Regeln 1 bis 6 bilden einen Grundregelsatz von Fuzzy-Produktionsregeln zur Schaltpunktbestimmung, der eine verbrauchsorientierte Fahrweise definiert. Es ist ersichtlich, daß die Regeln in Prioritätsklassen unterteilt sind, wodurch besonderen Anforderungen (z. B. Sicherheitsaspekten) Rechnung getragen wird.

Um das menschliche Schließverhalten besser abzubilden, werden Gamma-Operatoren verwendet. Standardmäßig wird der Gamma-Operator (nach Zimmermann und Zysno) mit der Gleichung eingesetzt:

$$\mu_{Regel} = (\mu_A \mu_B ...)^{1-Gamma}(1-(1-\mu_A)(1-\mu_B)...)^{Gamma}$$

Für Gamma = 0 liegt eine normale UND-Verknüpfung vor. Das Ergebnis wird aus der Multiplikation der Einzel-Wahrscheinlichkeiten gebildet. Bei Gamma = 1 liegt eine ODER-Verknüpfung vor, was durch die Komplementbildung der UND-Verknüpfung dargestellt ist. Für den Bereich 0 < Gamma < 1 liegt für die Verknüpfung ein Kompromiß zwischen UND und ODER vor, der je nach Auslegung von Gamma mehr oder weniger in eine Richtung tendieren kann.

Wenn die Fuzzy-Produktionsregeln 1 bis 6 des Grundregelsatzes in der beschriebenen Weise ausgewertet sind, so bleibt noch der Schritt, ein zusammenfassendes Endergebnis zu finden.

Hierzu wird jede Regel-Konklusion (Dann-Teil) mit der Bewertungszahl (Zutreff-Wahrscheinlichkeit) ihrer Prämisse gewichtet und die entstehenden Werte werden aufsummiert. Technisch gesehen ist das Ergebnis ein "gewichteter Flächenschwerpunkt" der einzelnen Grundregeln:

$$Flächenschwerpunkt = \frac{\Sigma(\mu_i * Folge_i)}{\Sigma \mu_i}$$

Bei der Schaltpunktbestimmung nach dem Grundregelsatz wird bei den Regel-Konklusionen vorzugsweise die Codierungs-Methode eingesetzt. Der Wertbereich ($Folge_i$) der Folgegröße "Gang" stellt sich wie folgt dar:

| | |
|---|---|
| 1 Gang hochschalten: | = +1 |
| Gang beibehalten: | = 0 |
| 1 Gang zurückschalten: | = -1 |

Da das Ergebnis (gewichteter Flächenschwerpunkt) ein reiner Zahlenwert ist, das hier zu steuernde (Stufen-) Getriebe aber nur diskrete Schaltzustände zuläßt, muß eine entsprechende Umformung angeschlossen werden. Diese Umformung kann nun direkt durch Fallunterscheidung geschehen:

Ergebnis < $x_1$:          Rückschalten (um einen Gang)

$x_1$ <= Ergebnis <= $x_2$:       Gang beibehalten und

Ergebnis > $x_2$:          Hochschalten (um einen Gang)

<u>Aufbau und Wirkungsweise des Funktionsblocks 12:</u>

Ausgangspunkt bei den Überlegungen einer Schaltpunkt-Adaption sind die den bekannten Schaltstrategien zugrunde liegenden Rahmenkriterien für ökonomisches und leistungsorientiertes Schaltverhalten. Ein Vergleich dieser Standard-Kennlinien führt zu zwei allgemein gültigen Aussagen:

1. Je leistungsorientierter (sportlicher) die Fahrweise und je höher die Gangstufe und je dichter die Leistungsanforderung (Drosselklappenstellung) bei einem mittleren Lastbereich liegt, desto später wird hoch- und desto früher wird zurückgeschaltet;

2. im Kick-down-Bereich ist der Schaltpunkt unabhängig von der Fahrweise.

Die nach diesen Richtlinien durchzuführende Verschiebung der Schaltpunkte kann grundsätzlich auf zwei Wegen erfolgen:

1. Entsprechende Fuzzy-Sets des Grundregelsatzes (Funktionsblock 11, Basis-Modul) werden so verändert, daß das gewünschte Verhalten erreicht wird oder

2. anstelle einer relativ aufwendigen Verschiebung einzelner Fuzzy-Sets kann auch über entsprechende Modulation der zugehörigen Meßgröße der gleiche Effekt erzielt werden.

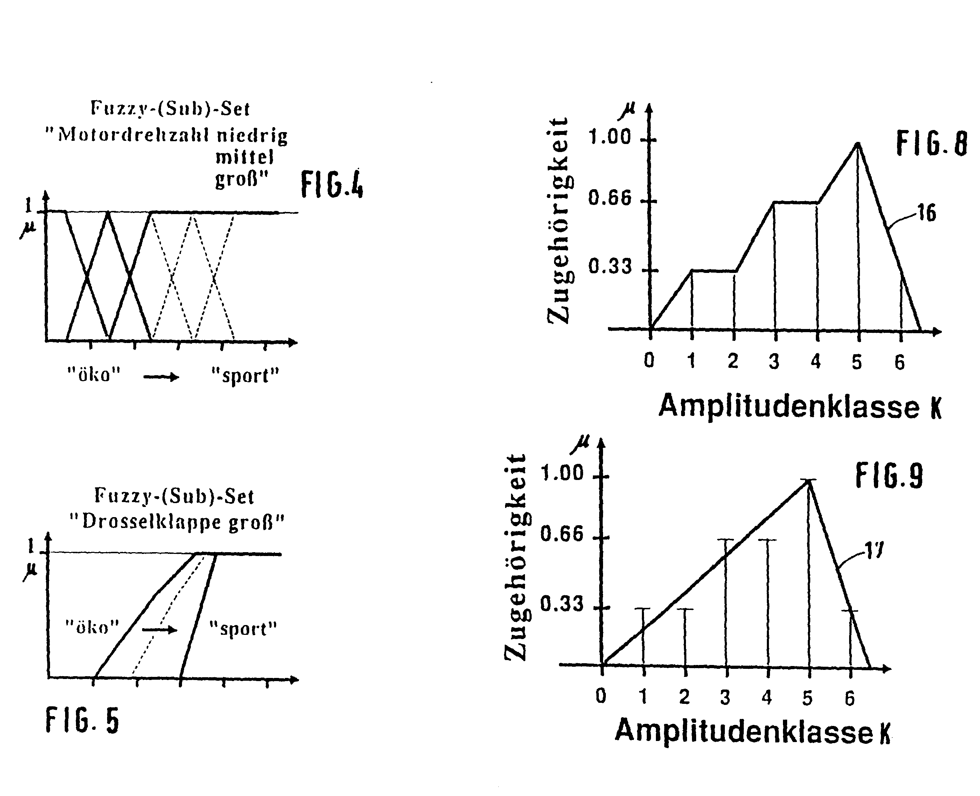

Lösungsvorschläge, die dem ersten Weg folgen, werden anhand der Fig. 4 bis 7 im folgenden erläutert:

In Fig. 4 ist das Fuzzy-Set für die Motordrehzahl, bestehend aus den Fuzzy-(Sub)Sets: Motordrehzahl "niedrig", "mittel" und "groß" analog zur Abbildung entsprechend Fig. 2 gezeigt. Die mit durchgezogenen Linien eingezeichneten Fuzzy-(Sub)Sets entsprechen einer verbrauchsorientierten Fahrweise ("Öko").

Um ein adaptives Schaltverhalten zu erzielen, kann das Fuzzy-Set der Motordrehzahl in Ordinaten-Richtung zu höheren Drehzahlen parallel verschoben werden. Es findet eine Verlagerung von einer verbrauchsorientierten zu einer leistungsorientierten ("Sport"-)Fahrweise statt.

Die verschobenen Fuzzy-Sets sind durch gestrichelte Linien eingezeichnet. Das Resultat dieser Verschiebung sind nach rechts verschobene Hochschaltgeraden, die in Fig. 5 mit gestrichelten Linien eingezeichnet sind.

Die Variation der Zugehörigkeitsfunktionen des Grundregelsatzes geschieht abhängig von Ausgangsvariablen eines Adaptions-Regelsatzes, auf den weiter unten näher eingegangen wird.

In Fig. 5 ist qualitativ die Variation des Hochschalt-Verhaltens des Fuzzy-Systems ("Öko" ... "Sport") in Abhängigkeit des Fuzzy-(Sub)Sets "Drosselklappenstellung" dargestellt.

An dieser Stelle sei darauf hingewiesen, daß die Figuren 4 und 5 lediglich die Parameter "Motordrehzahl" und "Drosselklappenstellung" zeigen. Selbstverständlich ist das Endergebnis einer Schaltpunkt-Adaption das Resultat einer Verknüpfung von Parametern, die durch den Grundregelsatz definiert sind. Dies ist ein ganz entscheidender Vorteil, der aus der Anwendung der Fuzzy-Logik-Methoden resultiert.

Es ist ferner möglich, die Variation von verbrauchsorientiertem bis leistungsorientiertem Schaltverhalten allein über eine dynmaische, nichtlineare Variation der Fuzzy-Sets der Motordrehzahl zu realisieren.

Vorzugsweise wird im Rahmen der hier verfolgten Gesamt-Konzeption, deren Hauptaugenmerke u. a. auf ein optimiertes Regelwerk und kurze Rechenzeiten gerichtet ist, vom zweiten Lösungsweg Gebrauch gemacht. Als zu modulierende Größe wird die Motordrehzahl ausgewählt. Die Motordrehzahl stellt eine zentrale strategische Größe dar. Wie erläutert, beschreibt der Grundregelsatz eine verbrauchsorientierte Fahrweise. Um eine leistungsorientierte Fahrweise zu erzielen, wird eine nichtlineare Addition eines Offsets zum aktuell gemessenen Wert der Motordrehzahl durchgeführt. Zur Erinnerung sei bemerkt, daß der aktuelle Wert der Motordrehzahl eine Eingangsvariable des Funktionsblocks 11 (Basis-Modul, Schaltpunktbestimmung) darstellt.

Der vorstehend erwähnte Offset wird im Funktionsblock 12 ermittelt. Durch den modulierten Motordrehzahlwert werden so dem Funktionsblock 11 anstelle der tatsächlichen Motordrehzahlen fiktive Motordrehzahlen eingegeben. Diese "manipulierten" Eingangsvariablen der Motordrehzahl führen zu einer Veränderung des Schaltverhaltens in der gewünschten Weise, d. h. in Richtung auf ein leistungsorientiertes Schaltverhalten.

Der Funktionsblock 12 arbeitet nach folgenden Fuzzy-Produktionsregeln:

**Regel 1:** (Priorität: 3.0, Gamma: 0.0)

Wenn Fahrweise sportlich und Drosselklappe mittel, dann Offset groß.

**Regel 2:** (Priorität: 3.0, Gamma: 1.0)

Wenn Fahrweise ökonomisch oder Drosselklappe sehr groß oder Drosselklappe klein, dann Offset Null.

**Regel 3:** (Priorität: 1.0, Gamma: 0.0)

Wenn Fahrweise zügig und Drosselklappe mittel, dann Offset mittel.

**Regel 4:** (Priorität: 1.0, Gamma: 0.0)

Wenn Fahrweise sportlich und Drosselklappe groß, dann Offset Null.

**Regel 5:** (Priorität: 1.0, Gamma: 0.0)

Wenn Fahrweise sportlich und Drosselklappe klein, dann Offset gering.

**Regel 6:** (Priorität: 1.0, Gamma: 0.0)

Wenn Fahrweise sportlich und Gang hoch und Drosselklappe nicht sehr groß, dann Offset mittel.

**Regel 7:** (Priorität: 1.0, Gamma: 0.0)

Wenn Fahrweise sportlich und Gang niedrig und Drosselklappe nicht sehr groß, dann Offset gering.

Die codierten Folgezustände für den Offset der Motordrehzahl können wie folgt festgelegt werden (bei den angegebenen Drehzahlwerten handelt es sich um Richtwerte, von denen, je nach den technischen Gegebenheiten, mehr oder weniger abgewichen werden kann):

| Offset: | Veränderung der Motordrehzahl (rpm) |
|---|---|
| Null | 0 |
| gering | 600 |
| mittel und | 1 200 |
| groß | 1 800 |

Im Rahmen der beschriebenen Lösung wird der Offset für die Motordrehzahl, vorzugsweise nach der Methode der Ermittlung des gewichteten Flächenschwerpunkts, ermittelt, so daß der Offset stufenlos zwischen Null und 1 800 Umdrehungen/min variieren kann.

Die im Funktionsblock 12 verarbeiteten Fuzzy-Produktionsregeln stellen einen Adaptions-Regelsatz dar, der den Grundregelsatz, der im Funktionsblock 11 bearbeitet wird, modifiziert, und zwar in Abhängigkeit von einer aktuellen Fahrweise, die von einer verbrauchsorientierten bis zu einer leistungsorientierten Fahrweise reicht. Die Ausgangsvariablen des Funktionsblocks 12 sind gleichzeitig Eingangsvariable des Funktionsblocks 11 (zu den Eingangsvariablen gehören, wie eingangs erwähnt, auch die aus den Fahrzeug-Parametern abgeleiteten Eingangsvariablen 8).

Aufbau und Wirkungsweise des Funktionsblocks 13:

Aus der Formulierung der Adaptionsregeln läßt sich unschwer erkennen, daß die Schaltpunkt-Adaption von der Fahrweise eines Fahrers abhängt. Um den Funktionsblock 12 zu einem Offset (oder einer anderen Variation des Grundregelsatzes) zu veranlassen, muß ihm ein Identifikationsergebnis (Eingangsvariable des Funktionsblocks 12) mitgeteilt werden, das einen Fahrer nach seiner Fahrweise stufenlos von "ökonomisch" bis "sportlich/leistungsorientiert" einstuft. Dieses Identifikationsergebnis liefert der Funktionsblock 13. Dieser Funktionsblock 13 arbeitet als Fahrer-Identifikations-Modul.

Als Merkmale für die Fahrweise können die folgenden Meßgrößen (Eingangsvariable, Fahrzeug-Parameter) verwendet werden (vorzugsweise geschieht dies wie hier nach dem Passieren eines Filters):

Drosselklappenstellung, Gradient einer Veränderung der Drosselklappenstellung, Fahrzeugeschwindigkeit (Abtriebsdrehzahl), Beschleunigung, Verzögerung, Stellung des Positionsschalters, Zugkraftüberschuß nach einem möglichen Hochschalten, Querbeschleunigung, Lenkwinkel nach Größe und Geschwindigkeit, Bremsschalter ein/aus.

Der Funktionsblock 13 verarbeitet Identifikationsregeln zur Identifikation eines Fahrers nach seiner Fahrweise, die von einer verbrauchsorientierten bis zu einer leistungsorientierten Fahrweise reicht.

Der Identifikations-Regelsatz von Fuzzy-Produktionsregeln läßt sich wie folgt formulieren:

**Regel 1:** Wenn Beschleunigung klein und Drosselklappe klein, dann ist die Fahrweise ökonomisch.

**Regel 2:** Wenn Beschleunigung mittel und Drosselklappe klein, dann ist die Fahrweise ökonomisch.

**Regel 3:** Wenn Beschleunigung klein und Drosselklappe mittel, dann ist die Fahrweise zügig.

**Regel 4:** Wenn Beschleunigung mittel und Drosselklappe mittel, dann ist die Fahrweise zügig.

**Regel 5:** Wenn Beschleunigung mittel und Drosselklappe groß, dann ist die Fahrweise sportlich.

**Regel 6:** Wenn Beschleunigung groß und Drosselklappe mittel, dann ist die Fahrweise zügig.

**Regel 7:** Wenn Beschleunigung groß und Drosselklappe groß, dann ist die Fahrweise sportlich.

Es ist möglich, die ersten beiden Regeln zu einer gemeinsamen Regel zusammenzufassen:

**Regel 1/2:** Wenn Beschleunigung nicht groß und Drosselklappe klein, dann ist die Fahrweise ökonomisch.

Analog hierzu lassen sich die Regeln 5 und 7 ebenfalls zusammenfassen:

**Regel 5/7:** Wenn Beschleunigung nicht klein und Drosselklappe groß, dann ist die Fahrweise sportlich.

Prinzipiell wären auch die Regeln 3, 4 und 6 zusammeniaßbar. Für die Inferenzbildung ist die Formulierung als einzelne Regeln jedoch vorteilhafter.

Um das Arbeitsprinzip des Funktionsblocks 13 zu veranschaulichen, soll beispielhaft eine Teil-Regelmenge vorgestellt werden, die zur Klassifizierung die Größen Drosselklappenstellung" und "Fahrzeuggeschwindigkeit" (Abtriebsdrehzahl) verwendet. Das Arbeitsprinzip soll anhand der Matrix erläutert werden:

| Drosselklappe | | | | |
|---|---|---|---|---|
| Beschleunigung | klein | mittel | groß | Fahrweise: |
| klein | Ö | Ö->Z | Z | Ö = ökonomisch |
| mittel | Ö->Z | Z | Z->S | Z = zügig |
| groß | Z | Z->S | S | S = sportlich |

Aus der Matrix geht hervor, daß sich ein verbrauchsrientierter Fahrer durch kleine Werte der Drosselklappenstellung und Beschleunigung auszeichnet. Hieran wird er erkannt. Eine große Aktivität bei der Veränderung der Drosselklappenstellung und hohe Beschleunigungswerte repräsentieren den leistungsorientierten Fahrer. Ein fließender Übergang zwischen diesen Grenzen wird durch zusätzliche Regeln für eine "zügige" Fahrweise erreicht.

In einzelnen Feldern der Matrix erscheinen Pfeile (z. B. Ö->Z). Diese Felder stehen für Bereiche, in denen eine eindeutige Aussage bezüglich der Fahrweise nicht getroffen werden kann. Diese Zustände können auch einer Berg- oder Talfahrt entsprechen. Nichtsdestotrotz wird aber eine sinnvolle Entscheidung getroffen, da die hier eingesetzte Inferenz-ethode des gewichteten Flächenchwerpunktes aus mehreren Regeln eine Entscheidung ableitet.

Aufgabe und Wirkungsweise des Funktionsblocks 15:

Der Funktionsblock 15 hat zur Aufgabe, die zur Identifikation des Fahrers genutzten Eingangsvariablen zu filtern. Die Eingangsvariablen werden zu Ausgangsvariablen in Form von gemittelten Merkmalen umgesetzt. Diese reduzierten Merkmale lassen eine Erkennung der Fahrweise eines bestimmten Fahrers zu.

Bei einer bevorzugten Ausbaustufe des erfindungsgemäßen Steuersystems übernimmt der Funktionsblock 15 eine weitere Funktion als Filter: Es werden Eingangsvariable zur Erkennung des Fahrzustandes zu Ausgangsvariablen in Form von gemittelten Merkmalen reduziert, die eine Erkennung des Fahrzustands erlauben. Auf diese Funktion wird weiter unten näher eingegangen.

Es bestehen zwei Möglichkeiten, die zur Identifikation der Fahrweise eines Fahrers genutzten Eingangsvariablen zu filtern, d. h. auf ein "mittleres Verhalten" zu reduzieren:

a) eine konventionelle Filterung und
b) eine Filterung nach Fuzzy-Logik-Methoden.

Bevorzugt wird eine Filterung nach Fuzzy-Produktionsregeln, die auf zwei Bewertungs-Kriterien basiert: Eindeutige Merkmale sollen schnell zu einer Einstufung des Fahrers führen. Weniger eindeutige Merkmale sollen den Fahrer behutsamer, d. h. entsprechend langsamer, einstufen. Mit anderen Worten ausgedrückt heißt dies, daß

ein leistungsorientierter Fahrer schnell als solcher erkannt wird,
während ein zügiger Fahrer diese Bewertung erst erreicht, wenn er seine Tendenz zu einer leistungsorientierten Fahrweise über einen längeren Zeitraum beibehält.

Der Funktionsblock 15 erzeugt (zunächst) an seinem Ausgang eine Bewertungszahl über drei allgemein gültige Regeln:

1. Wenn das Merkmal stark ausgeprägt ist, dann ist das Bewertungs-Inkrement positiv groß;

2. wenn das Merkmal schwach ausgeprägt ist, dann ist das Bewertungs-Inkrement negativ groß und

3. wenn das Merkmal mittelmäßig ausgeprägt ist, dann ist das Bewertungs-Inkrement Null.

Diese Regeln generieren zunächst eine gewichtete Inkrementierung und zeigen damit eine Tendenz auf. Erst über eine nachfolgende Summation dieser Inkremente entsteht eine endgültige Bewertungszahl.

Die Codierung der Folgezustände für das Bewertungs-Inkrement lautet:

positiv groß     = +1
Null     =0
negativ groß     = -1

Es sind auch asymmetrische Codierungen, wie z. B.:

positiv groß     = +2
Null     =0
negativ groß     = -1

möglich. Damit ist eine unterschiedliche Gewichtung der Merkmals-Gradienten (schneller Anstieg, langsamer Abfall) zu realisieren.

Aufbau und Wirkungsweise des Funktionsblocks 14:

Neben der Berücksichtigung der Fahrweise eines Fahrers ist es sinnvoll, auch einen bestimmten Fahrzustand (Stadt, Autobahn, Berg- und Talfahrt) in die Bewertung einzubeziehen. Der Funktionsblock 14 sorgt für eine dementsprechende Anpassung des Schaltverhaltens. Ein derartiger Ausbau des erfindungsgemäßen adaptiven Steuersystems erscheint insbesondere deswegen sinnvoll, weil:

im Stadtverkehr der Fahrer eine deutlich größere Schaltaktivität als beispielsweise auf der Autobahn erwartet, es bei Bergfahrt, insbesondere beim Befahren von Serpentinen, für den Fahrer störend ist, wenn Pendelschaltungen auftreten (hier soll der Gang beibehalten werden, der eine ausreichende Zugkraftreserve bietet); bei Talfahrt wird die Bremswirkung des Motors genutzt wird, so daß entsprechende Rückschaltungen angebracht sind.

Wenn die vorstehend formulierten Erkenntnisse in ein Fuzzy-Regelwerk umgesetzt werden, führt dies zu einem ergänzenden Adaptions-Regelsatz von Fuzzy-Produktionsregeln. Mit diesem ergänzenden Adaptions-Regelsatz läßt sich der Grundregelsatz (Funktionsblock 11) durch den Funktionsblock 12 in Abhängigkeit eines aktuellen Fahrzustandes modifizieren.

Vorab ist es allerdings notwendig, die unterschiedlichen Fahrzustände zu erkennen. Dies geschieht im Funktionsblock 14 in ähnlicher Weise wie bei der Erkennung einer bestimmten Fahrweise (Funktionsblock 13).

Die Eingangsvariablen des Funktionsblocks 14 sind die Ausgangsvariablen des Funktionsblocks 15, die, wie erwähnt, über einen längeren Zeitraumg gefilterte, d. h. gemittelte, Merkmale darstellen. Auch hier sind die Fahrzeuggeschwindigkeit,

Drosselklappenstellung und
Gradient der Verstellung der Drosselklappe,
Beschleunigung,
Bremsschalter ein/aus,
Motormoment,
Blinker,
Lenkwinkel
signifikante Fahrzeug-Parameter (Eingangsvariable des Funktionsblocks 15).

Diesen Größen werden typische Wertebereiche zugeordnet. Die Zuordnung erfolgt abhängig von einem bestimmten Fahrzustand. Daher können diese typischen Wertebereiche als Merkmale zur Erkennung eines bestimmten Fahrzustands herangezogen werden.

Hier tritt der günstige Fall auf, daß diese typischen Wertebereiche als Fuzzy-(Sub)Sets direkt eingesetzt werden können.

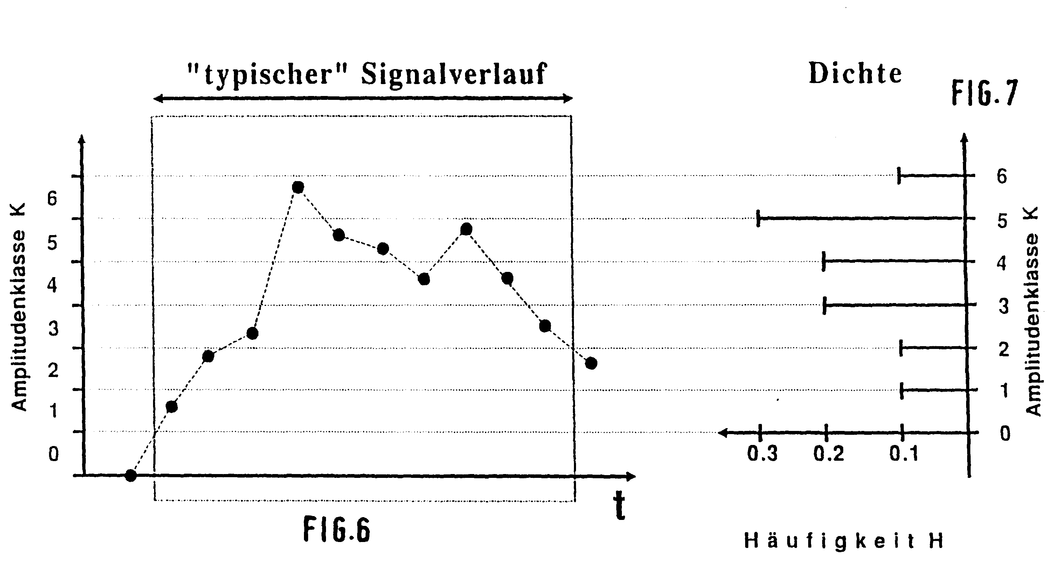

Die Fig. 6 zeigt einen typischen Signalverlauf eines signifikanten Fahrzeug-Parameters, wie er über der Zeit t in Amplituden-Klassen K null bis sechs auftritt.

Die Fig. 7 zeigt die dazugehörige diskrete Dichte-Funktion. Auf der Ordinate ist die Häufigkeit H, d. h. die Wahrscheinlichkeit, aufgetragen, mit der eine Amplituden-Klasse K (null bis sechs) bei der Aufzeichnung bestimmter Fahrzustände aufgetreten ist.

Aus der Dichte-Funktion kann im nächsten Schritt durch Bilden einer Hüllkurve 16 (Fig. 8) zum Fuzzy(Sub)Set übergegangen werden. Hierbei wird die Hüllkurve über die diskreten Dichte-Funktionswerte entsprechend Fig. 7 gebildet. Die Hüllkurve 16 wird anschließend auf das (Zugehörigkeits-)Intervall zwischen den Werten 0 und maximal 1 normiert. Dem Maximalwert der Dichte wird somit der Wert von maximal 1 zugeordnet, während die übrigen Dichte-Werte einen entsprechend kleineren Wert der Zugehörigkeit erhalten.

Die Arbeitsweise des Funktionsblocks 14 soll beispielhaft anhand zweier Fahrzeug-Parameter (Fahrzeuggeschwindigkeit $V_{fzg}$ und Drosselklappenaktivität $DK_{akt}$) erläutert werden.

Das Beispiel-Regelwerk sieht wie folgt aus:

1. Wenn $V_{fzg}$ hoch und $DK_{akt}$ nicht hoch, dann Fahrzustand = Autobahn.

2. Wenn $V_{fzg}$ klein und $DK_{akt}$ nicht niedrig, dann Fahrzustand = Stadt.

3. Wenn $V_{fzg}$ mittel und $DK_{akt}$ hoch, dann Fahrzustand = Landstraße.

4. Wenn $V_{fzg}$ mittel und $DK_{akt}$ mittel, dann Fahrzustand = Landstraße.

5. Wenn $V_{fzg}$ mittel und $DK_{akt}$ niedrig, dann Fahrzustand = Landstraße.

Oder als Matrix:

| $DK_{akt}$ | klein | mittel | hoch | Fahrzustand: |
|---|---|---|---|---|
| niedrig | LS | LS->AB | AB | ST = Stadt |
| mittel | ST->LS | LS | LS->AB | LS = Landstraße |
| hoch | ST | ST->LS | LS | AB = Autobahn |

Die mit Pfeil versehenen Stellen in der Matrix stellen wieder Bereiche dar, bei denen keine eindeutige Aussage (Stadt, Landstraße, Autobahn) möglich ist, z. B.:

für $V_{fzg}$ klein und $DK_{akt}$ niedrig bis mittel.

Dieser Zustand ist typisch für den Stop-and-Go-Betrieb in einem Verkehrsstau. Der Fahrer möchte hier in den "Go-Zeiten" zwar Schritt halten können, er möchte aber keine frühzeitige Hochschaltung, da der nächste Stop schon absehen ist.

Ein Schaltprogramm, das auf Stadtbetrieb arbeitet (also frühzeitig schaltet), ist im Stau ungeeignet, da das ständige Schalten für den Fahrer störend ist. Ebenso ist ein Autobahn-Programm fehl am Platz, da in längeren "Go-zeiten" (Kolonnenverkehr) das verzögerte Hochschalten den Verbrauch unnötig in die Höhe treibt.

Sinnvoll ist hier also ein Mittelweg zwischen den beiden Extremen. Im vorliegenden Fall ist dieser Mittelweg das Schaltverhalten für die Landstraße, den das Fuzzy-System (in den Eckzuständen auch ohne explizite Regel) auswählt.

Mögliche Abwandlungen des Steuersystems:

Neben der Verwendung von Fuzzy-UND- oder -ODER-Operatoren und der Gamma-Operatoren können auch Fuzzy-Modifikatoren eingesetzt werden, die die Form eines Fuzzy-Sets approximieren. Hierzu zählen der Konzentrationsoperator, der Dilationsoperator, die Normalisierungsoperation und die Kontrast-Intensivierung. Dort wo es möglich ist, werden dreieck- oder trapezförmige Fuzzy-Sets angewandt. Gegebenenfalls werden andere Formen zu diesen Fuzzy-Set-Klassen vereinfacht, wie dies am Beispiel der Fig. 11 wiedergegeben ist. Hier wurde das Fuzzy-Set nach Fig. 10, dessen linker Rand stufenförmig verläuft, durch eine Gerade ersetzt. Das vereinfachte Fuzzy-Set gehört zur Klasse der dreieckförmigen Fuzzy-Sets.

Um optimale Rechenzeiten zu erzielen, ist es ferner besonders vorteilhaft, die Gesamtheit der Fuzzy-Produktionsregeln in Regelpakete zu gliedern. Diese werden in Abhängigkeit vom Vorliegen oder Nichtvorliegen einer Einsprung-Bedingung bearbeitet.

Ein Fuzzy-Controller, der zum Einsatz innerhalb des vorschlagenen Steuersystems geeignet ist, zeichnet sich durch Regel-Prozessoren aus, die die einzelnen Fraktionen der Fuzzy-Produktionsregeln verarbeiten. Diese Regel-Prozessoren können gemeinsam auf einer Prozessorkarte angeordnet sein.

Das erfindungsgemäße Steuersystem kann auch direkt zur Festlegung des Soll-Übersetzungsverhältnisses bei einem stufenlosen Getriebe eingesetzt werden. Das aus der Inferenz resultierende Ergebnis wird hierbei direkt in kontinuierliche Getriebeeingangswerte überführt. Die abschließende Umrechnung des kontinuierlichen Ergebniswertes in diskrete Gangstufen entfällt damit.

Bei stufenlosen Getrieben kann aus der Soll-Übersetzungsvorgabe auch ein entsprechender Sollwert für die Motordrehzahl (bzw. Getriebeeingangsdrehzahl) und/oder die Fahrzeuggeschwindigkeit berechnet werden, wie es bei Betriebs strategien für stufenlose Getriebe bereits vorgeschlagen wurde.

Um den Fahrer zu informieren, kann eine visuelle Anzeige der nach dem Grundregelsatz ermittelten Gangstufe, der adaptierten aktuellen Gangstufe und/oder der Fahrweise des Fahrers und/oder des Fahrzustandes erfolgen. Diese Information wird vorzugsweise über ein LCD-Display erzeugt.

Bezugszeichen

1    Fahrzeug
2    Motor
3    automatisches Getriebe
4    Antriebswellenstrang
5    Ausgleichsgetriebe
6    angetriebene Räder
7    lenkbare Räder
8    Eingangsvariable
9    Mittel zum Erfassen von Eingangsvariablen
10   Steuersystem
11   Funktionsblock
12   Funktionsblock
13   Funktionsblock
14   Funktionsblock
15   Funktionsblock
16   Hüllkurve
17   vereinfachtes Fuzzy-Set

**Patentansprüche**

1. Steuersystem (10) zum Verändern der Übersetzung eines automatischen Getriebes (3) mit Mitteln (9) zum Erfassen von Eingangsvariablen, die von einem Fahrer-Fahrzeugsystem abgeleitet sind, Mitteln zum Erzeugen von Zugehörigkeitsfunktionen (Fuzzy-Sets) für die Eingangsvariablen und Mitteln zum Verändern der Getriebeübersetzungen, wobei die Mittel (9) zum Erfassen der Eingangsvariablen und die Mittel zum Erzeugen der Zugehörigkeitsfunktionen und die Mittel zum Verändern der Getriebeübersetzungen in der Weise zusammenwirken, daß nach Fuzzy-Produktionsregeln Ausgangsvariable ermittelt werden, mit denen eine Getriebeübersetzung bestimmt wird, dadurch **gekennzeichnet**, daß die Gesamtheit der Fuzzy-Produktionsregeln in folgende Fraktionen aufgeteilt ist:

   a) einem Grundregelsatz von Fuzzy-Produktionsregeln zur Schaltpunktbestimmung, der eine verbrauchsorientierte Fahrweise definiert,
   b) einem Adaptionsregelsatz von Fuzzy-Produktionsregeln zur Modifikation des Grundregelsatzes in Abhängigkeit von einer aktuellen Fahrweise, die von einer verbrauchsrientierten Fahrweise bis zu einer leistungsorientierten Fahrweise reicht,
   c) einem Identifikationsregelsatz von Fuzzy-Produktionsregeln zur Identifikation eines Fahrers nach seiner Fahrweise, die von einer verbrauchsorientierten Fahrweise bis hin zu einer leistungsorientierten Fahrweise reicht.

2. System nach Anspruch 1, **gekennzeichnet** durch einen ergänzenden Adaptionsregelsatz von Fuzzy-Produktionsregeln zur Modifikation des Grundregelsatzes in Abhängigkeit eines aktuellen Fahrzustandes.

3. System nach Anspruch , dadurch **gekennzeichnet**, daß die zur Identifikation des Fahrers genutzten Eingangsvariablen durch einen Filter (15) zu Ausgangsvariablen in Form von gemittelten Merkmalen reduziert werden, die eine Erkennung der Fahrweise zulassen.

4. System nach Anspruch 2, dadurch **gekennzeichnet**, daß die zur Erkennung des Fahrzustandes genutzten Eingangsvariablen durch einen Filter (15) zu Ausgangsvariablen in Form von gemittelten Merkmalen reduziert werden, die eine Erkennung des Fahrzustands erlauben.

5. System nach den Ansprüchen 3 oder 4, dadurch **gekennzeichnet**, daß die Ausgangsvariablen durch Filterung nach Fuzzy-Produktionsregeln erzeugt werden.

6. System nach den Ansprüchen 3 und 5, dadurch **gekennzeichnet**, daß der Filter (15) nach Fuzzy-Produktionsregeln unterschiedlich signifikanten Eingangsvariablen Bewertungs-Inkremente (PB, NB, ZO) zuordnet, die zu Bewertungszahlen aufsummiert werden, die die Ausgangsvariablen bilden.

7. System nach Anspruch 6, dadurch **gekennzeichnet**, daß der Filter (15) aus einem Regel-prozessor und einem Integrierer gebildet ist.

8. System nach Anspruch 6, dadurch **gekennzeichnet**, daß die Gradienten bei ansteigenden bzw. abfallenden Eingangsvariablen durch asymmetrische Zuordnung von Bewertungs-Inkrementen unterschiedlich gewichtet werden.

9. System nach den Ansprüchen 1 und 2 sowie 4 oder 5, dadurch **gekennzeichnet**, daß zwischen den Fahrzuständen: Stadt, Landstraße und Autobahn unterschieden wird und in Bereichen, in denen die Zuordnung zu einem dieser Fahrzustände unsicher ist, insbesondere bei Stop-and-Go-Betrieb, der Fahrzustand: Landstraße systematisch ausgewählt wird.

10. System nach Anspruch 1, dadurch **gekennzeichnet**, daß mindestens eine Zugehörigkeitsfunktion des Grundregelsatzes durch Parallelverschiebung in Ordinatenrichtung verlagert wird, abhängig von den Ausgangsvariablen des Adaptionsregelsatzes.

11. System nach Anspruch 1, dadurch **gekennzeichnet**, daß mindestens eine Zugehörigkeitsfunktion des Grundregelsatzes durch nichtlineare Variation in Ordinatenrichtung verlagert wird, abhängig von den Ausgangsvariablen des Adaptionsregelsatzes.

12. System nach den Ansprüchen 10 und 11, **gekennzeichnet** durch eine Kombination aus Parallelverschiebung und nichtlinearer Variation mindestens zweier Zugehörigkeitsfunktionen des Grundregelsatzes.

13. System nach den Ansprüchen 10 oder 11 oder 12, dadurch **gekennzeichnet**, daß die Zugehörigkeitsfunktionen der Eingangsvariablen: Motordrehzahl und/oder Drosselklappenstellung verändert werden.

14. System nach Anspruch 1, dadurch **gekennzeichnet**, daß mindestens eine Eingangsvariable des Grundregelsatzes durch nichtlineare Addition eines Offsets, der eine Ausgangsvariable des Adaptionsregelsatzes ist, moduliert wird.

15. System nach Anspruch 14, dadurch **gekennzeichnet**, daß die Eingangsvariable die Motordrehzahl ist.

16. System nach den Ansprüchen 14 und 15, dadurch **gekennzeichnet**, daß der Offset für die Motordrehzahl als diskretes Fuzzy-Set (Fuzzy-Array) implementiert ist.

17. System nach Anspruch 16, **gekennzeichnet** durch die Wertepaare:

| Offset: | delta n_Mot (rpm) |
|---------|-------------------|
| Null    | 0                 |
| klein   | 600               |
| mittel  | 1 200             |
| groß    | 1 800             |

18. System nach den Ansprüchen 1 oder 2, dadurch **gekennzeichnet**, daß den Fuzzy-Produktionsregeln (Grund-, Adaptions- und Identifikationsregelsatz) durch einen einstellbaren numerischen Wert unterschiedliche Prioritäten zugewiesen werden.

19. System nach den Ansprüchen 1 oder 2, dadurch **gekennzeichnet**, daß bei der Aggregation der Fuzzy-Sets des Grund-, Adaptions- und Identifikations-regelsatzes zur Modellierung menschlichen Schließens Gamma-Operatoren verwendet werden.

**20.** System nach den Ansprüchen 1 oder 2, dadurch **gekennzeichnet**, daß die Fuzzy-Sets des Grund-, Adaptions- und Identifikationsregelsatzes durch Modifikatoren (Normalisierungsoperation, Konzentrationsoperator, Dilationsoperator, Kontrast-Intensivierung) modifiziert werden.

**21.** System nach den Ansprüchen 18, 19 und 20, **gekennzeichnet** durch die Zuweisung von Prioritäten und die Anwendung von Gamma-Operatoren und Modifikatoren.

**22.** System nach den Ansprüchen 1 oder 2, dadurch **gekennzeichnet**, daß die Gesamtheit der Fuzzy-Produktionsregeln hierarchisch in Regelpakete gegliedert ist, deren blockweise Bearbeitung in Abhängigkeit vom Vorliegen oder Nicht-Vorliegen einer Einsprungbedingung erfolgt bzw. nicht erfolgt.

**23.** System nach Anspruch 22, dadurch **gekennzeichnet**, daß die Einsprung-Bedingungen gangspezifischen Regeln (z. B. Kick-down) oder spezifischen Zuständen (z. B. Wandler-Überbrückungskupplung offen/geschlossen) entsprechen.

**24.** Fuzzy-Controller mit Eingängen für Eingangsvariable zur Bildung von Inferenzen nach vorgegebenen Zugehörigkeitsfunktionen und Mitteln zum Defuzzyfizieren zu Ausgangsvariablen, mit denen eine Übersetzung eines automatischen Getriebes bestimmt wird, **gekennzeichnet** durch

a) einen Regel-Prozessor zum Bestimmen von Schaltpunkten nach einem Grundregelsatz;
b) einen Regel-Prozessor zum Adaptieren der Schaltpunkte nach einem Adaptionsregelsatz;
c) einen Regel-Prozessor zum Identifizieren eines Fahrers nach einem Identifikationsregelsatz und
d) einen Regel-Prozessor zur Identifikation eines Fahrzustandes nach einem ergänzenden Adaptionsregelsatzes.

**25.** Fuzzy-Controller nach Anspruch 24, dadurch **gekennzeichnet**, daß die Regel-Prozessoren auf einer Prozessorkarte angeordnet sind.

**26.** System nach Anspruch 1, **gekennzeichnet** durch ein Modul zur visuellen Anzeige der nach dem Grundregelsatz ermittelten Gangstufe, der adaptierten aktuellen Gangstufe und/oder der Fahrweise des Fahrers und/oder des Fahrzustandes.

## Claims

**1.** Control system (10) for changing the ratio of an automatic transmission (3), having means (9) of acquiring input variables which are derived from a driver-vehicle system, means of generating match functions (fuzzy sets) for the input variables and means of changing the gear ratios, the means (9) of acquiring the input variables and the means of generating the match functions and the means of changing the gear ratios cooperating in such a way that in accordance with fuzzy production rules output variables are established, by means of which a gear ratio is determined, characterized in that the totality of fuzzy production rules is subdivided into the following fractions:

a) a basic set of fuzzy production rules for shift point determination, which defines a consumption-oriented driving mode,
b) an adaptation set of fuzzy production rules for modifying the basic set of rules in dependence upon an actual driving mode ranging from a consumption-oriented driving mode to a performance-oriented driving mode,
c) an identification set of fuzzy production rules for identifying a driver by his driving mode, which ranges from a consumption-oriented driving mode to a performance-oriented driving mode.

**2.** System according to claim 1, characterized by a supplementary adaptation set of fuzzy production rules for modifying the basic set of rules in dependence upon an actual driving state.

**3.** System according to claim , characterized in that the input variables used to identify the driver are reduced by a filter (15) to output variables in the form of averaged features which allow recognition of the driving mode.

4. System according to claim 2, characterized in that the input variables used to recognize the driving state are reduced by a filter (15) to output variables in the form of averaged features which allow recognition of the driving state.

5. System according to claims 3 or 4, characterized in that the output variables are generated by filtering according to fuzzy production rules.

6. System according to claims 3 and 5, characterized in that the filter (15) in accordance with fuzzy production rules assigns to input variables of differing significance rating increments (PB, NB, ZO) which are added up into rating numbers which form the output variables.

7. System according to claim 6, characterized in that the filter (15) is formed by a rule processor and an integrator.

8. System according to claim 6, characterized in that the gradients in the event of rising or falling input variables are weighted differently by asymmetric assignment of rating increments.

9. System according to claims 1 and 2 as well as 4 or 5, characterized in that a distinction is made between the driving states: town, country road and motorway and in areas where the assignment to one of said driving states is uncertain, particularly during stop-go operation, the driving state: country road is systematically selected.

10. System according to claim 1, characterized in that at least one match function of the basic set of rules is displaced by a parallel shift in ordinate direction in dependence upon the output variables of the adaptation set of rules.

11. System according to claim 1, characterized in that at least one match function of the basic set of rules is displaced by a non-linear variation in ordinate direction in dependence upon the output variables of the adaptation set of rules.

12. System according to claims 10 and 11, characterized by a combination of parallel shift and non-linear variation of at least two match functions of the basic set of rules.

13. System according to claims 10 or 11 or 12, characterized in that the match functions of the input variables: engine speed and/or throttle valve position are varied.

14. System according to claim 1, characterized in that at least one input variable of the basic set of rules is modulated by non-linear addition of an offset which is an output variable of the adaptation set of rules.

15. System according to claim 14, characterized in that the input variable is the engine speed.

16. System according to claims 14 and 15, characterized in that the offset for the engine speed is implemented in the form of a discrete fuzzy set (fuzzy array).

17. System according to claim 16, characterized by the value pairs:

| offset: | delta n_Mot (rpm) |
| --- | --- |
| zero | 0 |
| low | 600 |
| average | 1 200 |
| high | 1 800. |

18. System according to claims 1 or 2, characterized in that by means of an adjustable numerical value different priorities are assigned to the fuzzy production rules (basic, adaptation and identification set of rules).

19. System according to claims 1 or 2, characterized in that, upon aggregation of the fuzzy sets of the basic, adaptation and identification set of rules, gamma operators are used to model the human decision-making process.

20. System according to claims 1 or 2, characterized in that the fuzzy sets of the basic, adaptation and identification set of rules are modified by modifiers (normalization operation, concentration operator, dilation operator, contrast intensification).

21. System according to claims 18, 19 and 20, characterized by the assignment of priorities and the use of gamma operators and modifiers.

22. System according to claims 1 or 2, characterized in that the totality of the fuzzy production rules are hierarchically divided into rule packets, the block-by-block processing of which is effected or not effected in dependence upon the presence or absence of an entry condition.

23. System according to claim 22, characterized in that the entry conditions correspond to gear-specific rules (e.g. kick-down) or specific states (e.g. converter-bridging clutch open/closed).

24. Fuzzy controller having inputs for input variables for forming inferences according to preset match functions and having means of defuzzifying into output variables, by means of which a ratio of an automatic transmission is determined, characterized by

    a) a rule processor for determining shift points according to a basic set of rules;
    b) a rule processor for adapting the shift points according to an adaptation set of rules;
    c) a rule processor for identifying a driver according to an identification set of rules and
    d) a rule processor for identifying a driving state according to a supplementary adaptation set of rules.

25. Fuzzy controller according to claim 24, characterized in that the rule processors are disposed on a processor card.

26. System according to claim 1, characterized by a module for visually displaying the gear speed determined according to the basic set of rules, the adapted actual gear speed and/or the driving mode of the driver and/or the driving state.


## Revendications

1. Système de commande (10) de changement de rapport d'une transmission automatique (3) avec des moyens (9) pour capter des données d'entrée variables qui sont transmises par un système conducteur-véhicule, des moyens pour générer des fonctions d'appartenance (dispositifs Fuzzy) pour les variables d'entrée, et des moyens pour modifier les rapports de transmission, dans lequel les moyens (9) pour capter les données d'entrée et les moyens pour générer les fonctions d'appartenance ainsi que les moyens pour modifier les rapports de transmission coopèrent de telle manière que des variables de sortie par lesquelles le rapport d'entraînement est déterminé, sont générées selon les règles de production Fuzzy, **caractérisé en ce que** la totalité des règles de production Fuzzy est fractionnée de la manière suivante :

    a) un jeu de règles de base des règles de production Fuzzy pour la détermination d'un point de commande, qui définit un mode de conduite orienté vers l'utilisateur,
    b) un jeu de règles d'adaptation des règles de production Fuzzy pour la modification du jeu de règles de base, dépendant du mode de conduite réel, qui s'étend d'un mode de conduite orienté "conducteur" à un mode de conduite orienté "rendement",
    c) un jeu de règles d'identification de règles de production Fuzzy d'un conducteur selon son mode de conduite qui s'étend d'un mode de conduite orienté "conducteur" à un mode de conduite orienté "rendement".

2. Système selon la revendication 1, **caractérisé par** un jeu de règles d'adaptation complémentaires des règles de production Fuzzy, pour la modification des règles de base dépendant d'un état de conduite instantané.

3. Système selon la revendication 1, **caractérisé en ce que**, pour l'identification du conducteur, les variables d'entrée utilisées sont réduites en variables de sortie sous forme de caractéristiques réduites de moitié qui permettent une reconnaissance du mode de conduite par un filtre (15).

4. Système selon la revendication 2, **caractérisé en ce que** les variables d'entrée utilisées pour connaître l'état de conduite sont réduites en variables de sortie sous forme de caractéristiques réduites de moitié qui permettent une reconnaissance du mode de conduite par un filtre (15).

**5.** Système selon les revendications 3 ou 4, **caractérisé en ce que** les variables de sortie sont générées par filtrage selon les règles de production Fuzzy.

**6.** Système selon les revendications 3 et 5, **caractérisé en ce que** le filtre (15) attribue selon les règles de production Fuzzy différents incréments de valorisation (PB, NB, ZO) significatifs, qui sont transformés en données de valorisation constituant les variables de sortie.

**7.** Système selon la revendication 6, **caractérisé en ce que** le filtre (15) est constitué d'un processeur de réglage et d'un intégrateur.

**8.** Système selon la revendication 6, **caractérisé en ce que** les gradients correspondant à des valeurs ascendantes, respectivement descendantes des variables d'entrée sont distribuées différemment selon une attribution asymétrique des incréments de valorisation.

**9.** Système selon les revendications 1 et 2 ainsi que les revendications 4 ou 5, **caractérisé en ce que** l'on distingue les états de conduite suivants : ville, route cantonale ou autoroute, et en ce que des secteurs où l'attribution n'est pas certaine, notamment lors d'arrêts-démarrages répétés, le choix porte sur route cantonale.

**10.** Système selon la revendication 1, **caractérisé en ce** qu'au moins une fonction d'appartenance des règles de base sont déplacées par un décalage parallèle dans le sens des ordonnées, en fonction des variables de sortie du jeu de règles d'adaptation.

**11.** Système selon la revendication 1, **caractérisé en ce** qu'au moins une fonction d'appartenance des règles de base sont déplacées selon une variation non linéaire dans le sens des ordonnées, en fonction des variables de sortie du jeu de règles d'adaptation.

**12.** Système selon les revendications 10 et 11, **caractérisé** par une combinaison d'un décalage parallèle et de variation non linéaire d'au moins deux fonctions d'appartenance du jeu de règles de base.

**13.** Système selon les revendications 10 ou 11 ou 12, **caractérisé en ce que** les fonctions d'appartenance des variables d'entrée : nombre de tours du moteur et/ou position du papillon sont modifiées.

**14.** Système selon la revendication 1, **caractérisé en ce** qu'au moins une variable d'entrée du jeu de règles de base est modulée par l'addition non linéaire d'une correction qui est une variable de sortie d'un jeu de règles d'adaptation.

**15.** Système selon la revendication 14, **caractérisé en ce que** la variable d'entrée est le nombre de tours du moteur.

**16.** Système selon les revendications 14 et 15, **caractérisé en ce que** la correction pour le nombre de tours du moteur est implémenté comme dispositif Fuzzy (Réseau Fuzzy).

**17.** Système selon la revendication 16, **caractérisé par** les couples de valeurs

| Correction: | delta n_Mot (tpm) |
|---|---|
| nulle | 0 |
| faible | 600 |
| moyenne | 1 200 |
| grande | 1 800 |

**18.** Système selon la revendication 1 ou 2, **caractérisé en ce que** les règles de production Fuzzy (base, adaptation et identification) ont des priorités différentes en fonction d'une valeur numérique réglable.

**19.** système selon les revendications 1 ou 2, **caractérisé en ce que** lors de l'agrégation des dispositifs Fuzzy des jeux de règles de base, d'adaptation et d'identification en vue d'une modélisation, on utilise des opérateurs gamma humains.

**20.** Système selon les revendications 1 ou 2, **caractérisé en ce que** les dispositifs Fuzzy des jeux de règles de base, d'adaptation et d'identification sont modifiés par des modificateurs (opérations de normalisation, opérations de concentration, opération de dilatation, intensification du contraste).

**21.** Système selon les revendications 18, 19 et 20, **caractérisé** par l'attribution de priorités et l'utilisation d'opérateurs gamma et de modificateurs.

**22.** Système selon les revendications 1 ou 2, **caractérisé en ce que** la totalité des règles de production Fuzzy est fragmentée de façon hiérarchique dans les paquets de réglage, dont le traitement par blocs s'effectue, respectivement ne s'effectue pas, selon la présence ou l'absence d'une condition d'intervention.

**23.** Système selon la revendication 22, **caractérisé en ce que** les conditions d'intervention dépendent de règles spécifiques liées aux vitesses (par exemple le kick-down) ou d'états spécifiques (par exemple pontage de transformateurs embrayages à l'état ouvert/fermé).

**24.** Contrôleur Fuzzy avec des entrées pour des variables d'entrée pour former des interférences selon des fonctions d'appartenance déterminées et des moyens pour "défuzzyfier" sous forme de variables de sortie à l'aide desquelles le rapport d'un entraînement automatique est défini, **caractérisé** par

a) un processeur de réglage pour la détermination des points de commande selon un jeu de règles de base;
b) un processeur de réglage pour l'adaptation des points de commande selon un jeu de règles d'adaptation;
c) un processeur de réglage pour l'identification d'un conducteur selon un jeu de règles d'identification et
d) un processeur de réglage pour l'identification d'un état de conduite selon un jeu de règles d'adaptation complémentaire.

**25.** Contrôleur Fuzzy selon la revendication 24, **caractérisé en ce** que les processeurs de réglage sont montés sur une carte de processeur.

**26.** Système selon la revendication 1, **caractérisé en ce** qu'il comporte un module pour l'indication visuelle du rapport déterminé par le jeu de règles de base, du rapport effectivement engagé après adaptation et/ou du mode de conduite du conducteur et/ou de l'état de conduite.

FIG.1

EP 0 639 250 B1

FIG.2

# FIG.3

Fuzzy-(Sub)-Set
"Motordrehzahl niedrig
mittel
groß" FIG.4

"öko" ⟶ "sport"

Fuzzy-(Sub)-Set
"Drosselklappe groß"

"öko" ⟶ "sport"

FIG. 5

FIG. 8

Zugehörigkeit

μ
1.00
0.66
0.33

0  1  2  3  4  5  6

16

Amplitudenklasse K

FIG.9

Zugehörigkeit

μ
1.00
0.66
0.33

0  1  2  3  4  5  6

17

Amplitudenklasse K

EP 0 639 250 B1

"typischer" Signalverlauf

FIG.6

Dichte

FIG.7

Amplitudenklasse K

Häufigkeit H

EP 0 639 250 B1